# EUROPEAN PATENT APPLICATION

(11) **EP 4 653 977 A1**
(43) Date of publication of application: **26.11.2025**
(21) Application number: 25177283.6
(22) Date of filing: 19.05.2025
(51) Int. Cl.: G05G 1/08, G05G 5/28, G05G 5/00, F24C 3/12, F24C 7/08

(54) **KNOB ASSEMBLY AND COOKING APPARATUS HAVING SAME**

(30) Priority: 24.05.2024 KR 20240067955; 22.10.2024 KR 20240145028
(71) Applicant: LG Electronics Inc., Yeongdeungpo-gu Seoul 07336 (KR)
(72) Inventor: Cho, SangHyeok, 08592 Seoul (KR); Yang, Daebong, 08592 Seoul (KR)
(74) Representative: Vossius & Partner Patentanwälte Rechtsanwälte mbB

(57) **Abstract**

Disclosed is a knob assembly and a cooking apparatus having it. The knob assembly includes a base portion (110) on a control panel (30) and a driving shaft (71) protruding from it. A knob body (NB) rotates on and linearly moves along the driving shaft (71). The knob body (NB) features an operating button (140) with an exposed operating portion (143) that moves independently of the knob body (NB) in a direction different from the axial direction. The operating button (140) has a first position interfering with the base portion (110), restricting knob body (NB) rotation, and a second position, moved away from the first in a non-axial direction, allowing knob body (NB) rotation. Consequently, the cooking apparatus is operated by rotating the knob body (NB) only after the user presses the operating button (140), preventing unintended operation or errors of the knob assembly.

## Description

The present application claims priority to Korean Patent Application No. 10-2024-0067955, filed May 24, 2024 and Korean Patent Application No. 10-2024-0145028, filed October 22, 2024.

### Field of the Invention

Disclosed relates to a knob assembly and a cooking apparatus having the same.

### Description of the Related Art

A cooking apparatus is a device used to cook ingredients to make food. The cooking apparatus can also be used to heat food to the right temperature for consumption. The cooking apparatus may be classified in various ways according to the forms of heat sources used and the types of fuels. For example, the cooking apparatus may be categorized as open-type or sealed-type depending on the form of the space where food is placed. The sealed-type cooking apparatus includes ovens and microwave ovens, and the open-type cooking apparatus includes cooktops and griddles.

The sealed-type cooking shields the space where ingredients are placed with doors and heats the shielded space to cook the food. The open-type cooking apparatus is configured such that ingredients or a container storing ingredients is located in an open space and the ingredients or container is heated to cook ingredients to make food. In recent years, combination cooking apparatuses, which are a combination of sealed-type and open-type cooking apparatuses, has been used. The combination cooking apparatuses use a combination of heat sources to cook a variety of ingredients and can cook multiple foods simultaneously.

The cooking apparatus may be equipped with knobs for operation. The knob can be used to turn the cooking apparatus on or off, or to set cooking modes. Furthermore, the knob may be used to adjust a heating temperature.

In the cooking apparatus, for example a gas range, the knob may be manipulated in a push and turn manner to operate the cooking apparatus. The push and turn knob are implemented such that a user must hold it down and rotate the knob to operate the cooking apparatus. The user can adjust a heating temperature or select a cooking mode by pressing the knob and adjusting the amount of rotation on the drive shaft. The push and turn knob increase the safety of the cooking apparatus by requiring both steps to operate the cooking apparatus.

However, the push and turn knob also protrudes outward, so it's possible for users to rotate the knob while unintentionally pressing the knob. For example, without recognizing of the user, the user's body touches the knob to press the knob and rotate the knob. Furthermore, it is also possible for a toddler to operate the knob to start the cooking apparatus. As described above, this can lead to fire or burns to the user, so it is important to increase the stability of the cooking apparatus.

### SUMMARY OF THE INVENTION

The present disclosure is provided to solve the above-described problems of the related art, and an objective of the present disclosure is to provide a knob assembly having a operating button (safety button), and prevent the knob assembly from being operated when the operating button is not pressed.

Another objective of the present disclosure is to form an operation direction of an operating button different from a rotational direction and a pressing direction of a knob assembly.

Yet another objective of the present disclosure is to simplify a structure of knob assembly by minimizing the number of parts added due to an operating button.

To achieve the above-described objectives, according to the present disclosure, there is provided a knob assembly including: a base portion disposed at a control panel; a driving shaft protruding from the control panel; a knob body rotated on the driving shaft and linearly moved in a axial direction of the driving shaft; and a operating button comprising a operating portion exposed outside of the knob body and moved in a different direction from the axial direction. At this point, the operating button may include a first position where the operating button interferes with the base portion to restrict rotation of the knob body, and a second position moved from the first position in a direction different from the axial direction to allow rotation of the knob body. Therefore, only when the user presses the operating button, the knob body is rotated to operate the cooking apparatus, thereby preventing arbitrary operation or errors of the knob assembly by the operating button.

A radial distance between the operating portion at the first position and the driving shaft is longer than a radial distance between the operating portion at the second position and the driving shaft.

The operating button may be moved between the first position and the second position in a direction different from the axial direction along a linear path or a curved path. When the knob body is rotated on the driving shaft, the operating button may be rotated with the knob body and be moved to a third position.

The knob body and the operating button may be restricted to each other in a rotational direction on the driving shaft, so that the knob body and the operating button may be rotated with each other.

A operating hole may be formed through the knob body in the direction perpendicular to the axial direction. The operating portion may be exposed outwards through the operating hole, and the operating portion may form a portion of an exterior part of the knob body.

A safety pin interfering with the base portion or released from interference may be connected to the operating button. The safety pin may be operated in conjunction with the operating button and be moved between the first position and the second position.

The knob body may be linearly moved in a first direction that is the axial direction, and the operating button may be linearly moved between the first position and the second position in a second direction different from the first direction. The safety pin may protrude in the first direction.

The knob body may include a first knob body having an inner space that is open toward the base portion. A second knob body may be disposed in the inner space, and rotated and linearly moved with the first knob body. An operating hole may be formed through the first knob body to expose the operating portion of the operating button.

The operating button may interfere with an edge of the operating hole when it is moved from the second position to the first position, thereby restricting movement.

The second knob body may include a shaft coupling part to which an end portion of the driving shaft is coupled. A remaining portion of the second knob body excluding the shaft coupling part, and the operating button may be disposed at opposite sides to each other with the shaft coupling part centered.

A pair of elastic members may be provided in the knob body to provide an elastic force to the operating button. The second knob body may include a support plate protruding in the axial direction toward the opposite side of the base portion. The support plate may be disposed between the pair of elastic members.

The support plate may be disposed to face the operating portion each other.

The elastic member may provide an elastic force to the operating button in a direction of moving the operating button to the first position.

A weight plate may be coupled to the knob body to be rotated and moved with the knob body. The weight plate may include a pin passing hole into which the safety pin penetrates. The safety pin may be moved from the first position to the second position with passing through the pin passing hole.

The safety pin protruding in the first direction that is the axial direction may be connected to the operating button. The base portion may include a locking groove recessed from a central portion of a rotation path of the safety pin in the radial direction of the rotation path. At the first position of the operating button, the safety pin may be inserted into the locking groove and restrict rotation of the knob body.

The locking groove may be open in a direction toward a central portion of the rotation path of the safety pin. When the operating button is moved from the first position to the second position, the safety pin is moved toward a central portion of the rotation path and separated from the locking groove.

A portion of the operating button may protrude in the first direction that is the axial direction to form a protrusion. At the first position of the operating button, the protrusion may be inserted into the locking groove and restrict rotation of the knob body.

The locking groove may be open toward a central portion of the rotation path of the safety pin. A guide part may be provided on an edge of the locking groove by protruding toward a central portion of the rotation path.

A surface of the guide part may be an inclined surface or a curved surface.

Based on the locking groove as the center, the guide part may be provided on either side of the locking groove.

A depth in the axial direction of the locking groove may be longer than a moving distance in the axial direction of the operating button.

The base portion may include multiple locking grooves, which are formed by being recessed from a central portion of a rotation path of the safety pin in the radial direction of the rotation path and into which the safety pin is inserted, and the multiple locking grooves may be disposed to be spaced from each other along the rotation path.

The base portion may include a lock pin protruding in a radial direction of a rotation path of the knob body. The operating button may include a safety groove into which the lock pin is inserted. When the operating button is moved from the first position to the second position, the lock pin may be separated from the safety groove.

On the bottom surface of the locking groove, the stepped part may be formed by protruding toward the safety pin in the axial direction. When the operating button is located at the first position, the stepped part may interfere with the safety pin in the axial direction so that movement in the axial direction of the safety pin may be restricted.

As described above, according to the present disclosure, the knob assembly and the cooking apparatus having the same have the following effects.

In the present disclosure, when the operating button is not pressed, the knob body (handle) is not rotated. When the user should press the operating button first, the knob body is rotated and the cooking apparatus can be operated. As described above, the operating button can prevent tampering of the knob assembly or malfunctioning thereof, and therefore the stability of the cooking apparatus can be improved.

Furthermore, according to the present disclosure, the operating button may be operated in a direction different from the shaft-directional movement of the knob body. When the direction of pressing the operating button and the direction of pressing the knob body are formed different from each other, it is less likely that the user accidentally operates the knob assembly. Accordingly, the cooking apparatus of the cooking apparatus can be increased.

Specifically, the operating portion of the operating button may be moved along a linear path or a curved path in the second direction different from the axial direction (first direction), i.e., a linearly moving direction of the knob body, and the rotational direction of the knob body. Accordingly, this further reduces the probability of the knob assembly actuated randomly due to user error or interference with objects around the cooking apparatus.

Furthermore, according to the present disclosure, the operating button may protrude sideways of the knob body. As described above, the operating button protruding sideways may be pressed naturally when the user grips the knob body. Therefore, even when the operating button is added, the ease of assembly of the knob assembly is not deteriorated, and the user can easily control the cooking apparatus.

Furthermore, in the present disclosure, the operating button may be moved between the first position of interfering in the rotational direction and the second position of releasing interference. At this point, the knob body interferes with the base portion of the knob assembly or the control panel to which the knob assembly is mounted at the first position, thereby restricting rotation. Therefore, the structure of restricting manipulation of the knob assembly can be simply implemented, and the number of parts added due to the operating button can be minimized.

Furthermore, according to the present disclosure, in the knob body, the second knob body (inner body) may be provided in the first knob body (outer body) forming the exterior part, and the second knob body (inner body) may be symmetric to the operating button. When the second knob body and the operating button are disposed symmetrically at the knob assembly, and it is possible to prevent the knob assembly from leaning in one direction due to a shift in its center of gravity caused by the operating button. Therefore, according to the present disclosure, the knob assembly can provide excellent control even when the operating button is added. Furthermore, in the knob assembly, the second knob body fills an empty space at one portion without the operating button, so that the durability of the entire knob assembly can be increased.

Furthermore, when the second knob body and the operating button are disposed symmetrically at the knob assembly, the volume of the parts occupied in the knob assembly can be reduced, and the inside space utilization of the knob assembly can be increased. Accordingly, the knob assembly can be miniaturized and be mode light weight.

Furthermore, according to the present disclosure, the second knob body constituting the knob body may be responsible for coupling with other parts such as the driving shaft (valve shaft). Then, the first knob body exposed outward so that the user grips may have a relatively simple structure, and contraction due to a complex form thereof can be prevented during injection molding. Therefore, the aesthetic and the manufacturing quality of the knob assembly can be improved.

Furthermore, according to the present disclosure, the pair of elastic members may be provided in the knob body to return the operating button to the first position. The support plate provided in the second knob body is disposed between the pair of elastic members to guide the pair of elastic members when the elastic members are contracted/recovered. As described above, according to the present disclosure, the pair of elastic members returns the operating button with each other, so that the operating button may be stably returned without twisting to either side, which can improve the reliability of the operation of the knob assembly.

Furthermore, in the present disclosure, the driving groove includes the stepped part so that the shaft-directional movement of the safety pin can be restricted. Therefore, when the operating button is not pressed, the knob body (handle) is not pressed in the axial direction. When the user should press the operating button first, the knob body is pressed in the axial direction so that the cooking apparatus can be operated. As described above, the operating button can prevent tampering of the knob assembly or malfunctioning thereof, and therefore the stability of the cooking apparatus can be improved.

### BRIEF DESCRIPTION OF THE DRAWINGS

FIG. 1 is a perspective view showing an embodiment of a cooking apparatus to which a knob assembly according to the present disclosure is applied.
FIG. 2 is a perspective view showing a structure of a control panel and a knob assembly constituting the embodiment of the cooking apparatus shown in FIG. 1.
FIG. 3 is an exploded-perspective view showing components constituting an embodiment of the knob assembly according to the present disclosure.
FIG. 4 is an exploded-perspective view at a different angle from FIG. 3, the view showing the components constituting the embodiment of the knob assembly according to the present disclosure.
FIG. 5 is a perspective view showing a state without a first knob body and a weight plate constituting the embodiment of the knob assembly according to the present disclosure.
FIG. 6 is a perspective view showing a state without the first knob body and the weight plate constituting another embodiment of the knob assembly according to the present disclosure.
FIG. 7 is a perspective view showing the embodiment of the knob assembly according to the present disclosure in a first state (locked state).
FIG. 8 is a sectional view taken along line VIII-VIII' of FIG. 7.
FIG. 9 is a perspective view showing the embodiment of the knob assembly according to the present disclosure in a second state (unlocked state).
FIG. 10 is a sectional view taken along line X-X' of FIG. 9.
FIG. 11 is a perspective view showing the embodiment of the knob assembly according to the present disclosure in a third state (pressed state).
FIG. 12 is a sectional view taken along line XII-XII' of FIG. 10.
FIG. 13 is a perspective view showing the embodiment of the knob assembly according to the present disclosure in a fourth state (rotated state).
FIG. 14 is a perspective view showing a relative position of the knob body and the weight plate when a safety pin, which constitutes the embodiment of the knob assembly according to the present disclosure, is located at the first position.
FIG. 15 is a perspective view showing a relative position of the base portion and an operating button when the safety pin, which constitutes the embodiment of the knob assembly according to the present disclosure, is located at the first position.
FIG. 16 is a perspective view showing a relative position of the knob body and the weight plate when the safety pin, which constitutes the embodiment of the knob assembly according to the present disclosure, is located at the second position.
FIG. 17 is a perspective view showing a relative position of the base portion and the operating button when the safety pin, which constitutes the embodiment of the knob assembly according to the present disclosure, is located at the second position.
FIG. 18 is a perspective view showing a base portion constituting the embodiment of the knob assembly according to the present disclosure.
FIGS. 19 to 21 are views successively showing operational states of another embodiment of the knob assembly according to the present disclosure.
FIG. 22 is a perspective view showing a structure of the base portion constituting another embodiment of the knob assembly according to the present disclosure.
FIG. 23 is a sectional view showing a relative position of the safety pin and the locking groove when the safety pin, which constitutes another embodiment of the knob assembly according to the present disclosure, is located at the first position.
FIG. 24 is a sectional view showing a relative position of the safety pin and the locking groove when the safety pin, which constitutes another embodiment of the knob assembly according to the present disclosure, is located at the second position.

### DETAILED DESCRIPTION OF THE DISCLOSURE

Hereinafter, exemplary embodiments of the present disclosure will be described in detail with reference to the illustrative drawings. Wherever possible, the same reference numerals will be used throughout the drawings and the description to refer to the same or like elements or parts. Furthermore, it is to be noted that, when the detailed description of the functions and configuration of conventional elements related to the present disclosure may make the gist of the present disclosure unclear, a detailed description of those elements will be omitted.

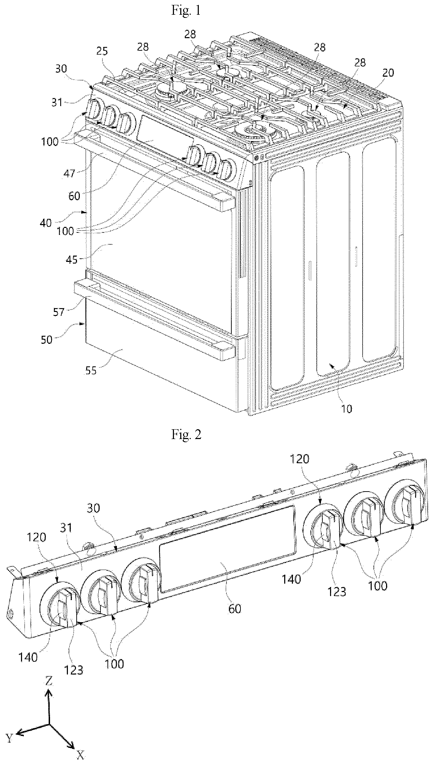

The present disclosure relates to a knob assembly 100 and a cooking apparatus having the same, and at this point, a cooktop unit 20 including a plurality of heating devices 28 may be provided at an upper portion of the cooking apparatus. The plurality of heating devices 28 may be a gas heating device 28 using gas as an energy source, an electric cooktop, or an induction. FIG. 1 illustrates the cooktop unit 20 with a gas heating device 28 among the heating devices 28 as an example. As shown in FIG. 1, the heating device 28 may be disposed to be exposed on the upper portion of the cooking apparatus. As another example, the heating device 28 may be disposed at an inner portion of the cooking apparatus or inner and outer portions of the cooking apparatus respectively.

The knob assembly 100 may be used to control the heating device 28. A user manipulates the knob assembly 100 to turn on/off the heating device 28. The user manipulates the knob assembly 100 to adjust the amount of heat supplied by the heating device 28. Otherwise, the user manipulates the knob assembly 100 to control an oven unit 40, 50, or select a cooking mode of the cooking apparatus.

The user may press and then rotate the knob assembly 100 to control the heating device 28. At this point, as shown in FIG. 2, to prevent the knob assembly 100 from being arbitrarily manipulated due to user mistakes or interference with surrounding objects, the knob assembly 100 of the present disclosure includes an operating button 140. Hereinbelow, the knob assembly 100 will be described with the operating button 140.

When describing a structure of the cooking apparatus, an exterior part of the cooking apparatus may be formed of an outer body 10. Without a door disposed in a front portion, the outer body 10 may form a frame of the cooking apparatus. A separate inner housing (not shown) may be disposed inside the outer body 10.

At least one heating device 28 is disposed at the cooktop unit 20 to heat food to be cooked or a container in which food is stored. In the embodiment, a total of four heating devices 28 are disposed on the cooktop unit 20.

The cooktop unit 20 may include a grate 25. The grate 25 may be a frame enabling a cooking container to be placed on an upper portion of each heating device 28. The grate 25 may be removably seated on the cooktop unit 20. The grate 25 may be located above the heating devices 28.

A control panel 30 may be disposed at an upper portion of the oven unit 40, 50, and a front portion of the cooktop unit 20. The control panel 30 may include the knob assemblies 100 to control the oven unit 40, 50 and the cooktop unit 20. A plurality of knob assemblies 100 may control respectively the heating devices 28 and the oven devices. The control panel 30 may be a control device, or may be referred to as a front panel. The control panel 30 may not be disposed at the front portion of the cooktop unit 20, and may be disposed at different locations, such as a lower portion of the cooking apparatus, a side surface of the cooking apparatus, an upper surface of the cooking apparatus, or the like.

The control panel 30 may include a display unit 60. The display unit 60 may display information about the cooking apparatus. The display unit 60 is made of a touch panel, and may be used for the user to control the cooking apparatus. In other words, the display unit 60 may be a type of the operating portion 143. As another example, the display unit 60 may be omitted.

When describing the oven unit 40, 50, the oven unit 40, 50 may include a plurality of oven devices. In the embodiment, the oven unit 40, 50 may include the first oven device 40 and a second oven device 50. The first oven device 40 and the second oven device 50 may be disposed at different heights. The first oven device 40 and the second oven device 50 may have separately partitioned cooking chambers, respectively.

A first door 45 of the first oven device 40 may be operated in a type of pull-down method in which an upper end is rotated vertically on a lower end. As another example, the first door 45 may be operated in the side swing manner in which the door is opened sideways. Reference numeral 47 indicates a handle to open and close the first door 45.

A second door 55 of the second oven device 50 may be operated in a forward and backward sliding manner. As another example, like the above-described first door 45, the second door 55 may be moved in a type of pull-down method in which an upper end is rotated vertically on a lower end. Reference numeral 57 indicates a handle to open and close the second door 55.

Next, the knob assembly 100 will be described. Referring to FIGS. 1 and 2, in the embodiment, 6 knob assemblies 100 are disposed on the control panel 30. This is just one example, the control panel 30 may include 1 to 5 knob assemblies or 7 or more knob assemblies 100. As another example, the knob assembly 100 is not disposed on the control panel 30, but is disposed on an upper surface or a side surface of the cooking apparatus. As another example, the knob assembly 100 may be disposed on a lower portion of a front surface of the cooking apparatus.

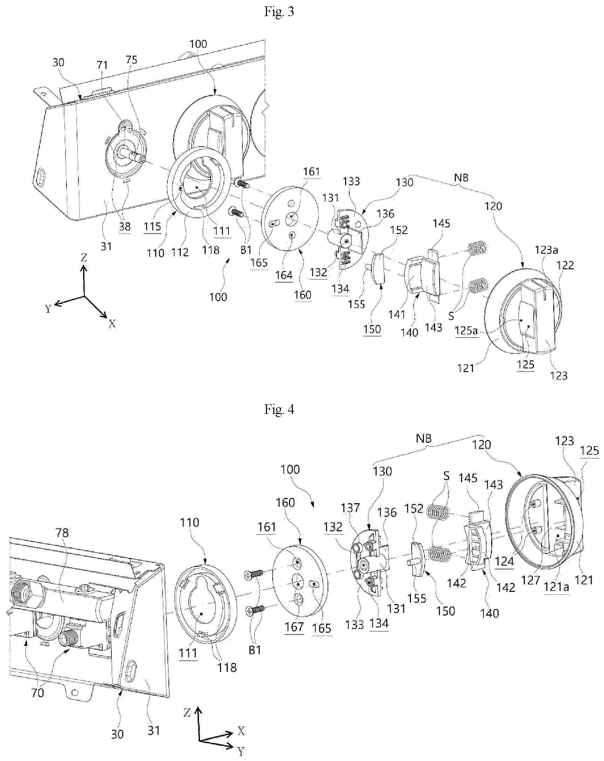

As shown in FIG. 2, the knob assembly 100 may include a circular body, and a portion protruding from the circular body and facilitating the user's grip. In the embodiment, the operating button 140 is provided on a side surface of the knob assembly 100. Only when the user presses the operating button 140, the knob assembly 100 can be operated, more specifically, be rotated on an axial direction of a driving shaft 71 (referring to FIG. 3).

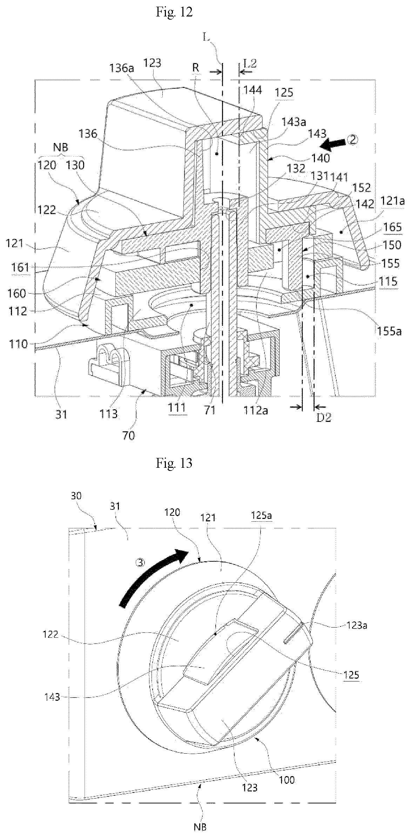

For reference, hereinbelow, the axial direction is a longitudinal direction of the driving shaft 71 and is an X-axial direction in FIGS. 2 to 4. Hereinbelow, a rotational direction is a direction in which the knob assembly 100 is rotated on the driving shaft 71 (referring to arrow in FIG. 13). Hereinbelow, a linearly moving direction of the operating button 140 is a Y-axial direction in FIGS. 2 to 4. Of course, when the knob assembly 100 is rotated, the linearly moving direction of the operating button 140 may be changed.

As shown in FIGS. 3 and 4, the views shows exploded states of parts of the knob assembly 100. Describing the driving shaft 71 first for convenience of description, the driving shaft 71 will be described first. The driving shaft 71 is coupled to the knob assembly 100. The driving shaft 71 is a rotation center of the knob assembly 100. The driving shaft 71 may be rotated with the knob assembly 100 when the knob assembly 100 is rotated. The driving shaft 71 may be linearly moved with the knob assembly 100 when the knob assembly 100 is moved in the axial direction.

The driving shaft 71 may be provided at a heating driving part 70 (referring to FIG. 4). The heating driving part 70 may serve to supply an energy source to the heating device 28. For example, the heating driving part 70 may be configured to be driven by the driving shaft 71 and control the heating device 28. Therefore, the driving shaft 71 may be a valve shaft.

At this point, the energy source may be gas or electricity. When the energy source is electricity, the heating driving part 70 may be referred to as a regulator, and when the energy source is gas, the heating driving part 70 may be referred to as a valve assembly. The driving shaft 71 may be a part constituting the knob assembly 100. As another example, the driving shaft 71 may be a portion of the heating driving part 70. Reference numeral 32 indicates a through hole of a front plate 31 through which the driving shaft 71 passes.

More specifically, the driving shaft 71 may be coupled to the heating driving part 70 pushably and rotatably. At this point, when the driving shaft 71 is not pushed, the heating driving part 70 may prevent the driving shaft 71 from being rotated. As the driving shaft 71 is pushed and rotated with respect to the heating driving part 70, the heating driving part 70 may supply the energy source to the heating device 28.

The driving shaft 71 may include a coupling member 75. The coupling member 75 may surround an outer circumferential surface of the driving shaft 71. The coupling member 75 may be made of an elastic material such as a leaf spring. The coupling member 75 may be disposed between the driving shaft 71 and a shaft coupling groove 131 to be described below, and may provide an elastic force between the driving shaft 71 and the shaft coupling part 131. Accordingly, it is possible to prevent the driving shaft 71 from being separated from the shaft coupling part 131.

The driving shaft 71 may be manipulated with the knob assembly 100. More specifically, the driving shaft 71 may be coupled to a knob body NB and rotated with the knob body NB. The driving shaft 71 may be linearly moved in the axial direction with the knob body NB. Therefore, when the user manipulates the knob assembly 100, the heating driving part 70 is operated as a medium of the driving shaft 71, which allows the heating device 28 to be operated.

When describing a structure of the knob assembly 100, the knob assembly 100 may include a base portion 110. The base portion 110 may be disposed at the front plate 31 of the control panel 30. A base hole 111 is formed through the base portion 110 so that the driving shaft 71 passes therethrough, and the base hole 111 may support rotation of the driving shaft 71. In other words, the base portion 110 may allow the driving shaft 71 to be stably rotated and linearly moved in the axial direction.

As another example, the base hole 111 may be omitted from the base portion 110. In this case, the driving shaft 71 does not pass through the base portion 110 and may directly pass through the front plate 31.

The base portion 110 may have a ring structure. Centered on the base hole 111 formed at a central portion of the base portion 110, a base fixation part 118 may be formed outside the base hole 111. The base fixation part 118 may be inserted into a fastening hole 118 formed in the front plate 31 in elastic deformation. As another example, the base fixation part 118 is omitted, and the base portion 110 may be mounted to the front plate 31 with a fastener (not show), such as a screw, or an adhesive.

The base portion 110 may include a locking groove 115 formed therein. The locking groove 115 may catch a portion of a safety pin 150. At this point, catching means that a portion of the safety pin 150 is inserted into the locking groove 115 to restrict rotation of the safety pin 150 and the knob body NB. As described above, the locking groove 115 may prevent the safety pin 150 from being rotated on the driving shaft 71, and thus rotation of the knob body NB is also prevented. Therefore, the locking groove 115 may be an interference part restricting rotation of the knob body NB.

The locking groove 115 is recessed in a direction perpendicular to the axial direction. More specifically, the locking groove 115 may have a structure in which the locking groove is recessed in a radial direction of the base portion 110. The locking groove 115 is recessed from a central portion of a rotation path of the safety pin 150 in a radial direction of the rotation path. A pin part 155 is inserted into the locking groove 115 recessed as described above, or separated therefrom. The insertion/separation of the pin part 155 may be performed to be dependent on a movement of the operating button 140.

The locking groove 115 may surround a surface of the pin part 155 when the operating button 140 is located at the first position. When the operating button 140 is rotated with the knob body NB (referring to FIG. 13) to be disposed at the third position, the locking groove 115 having a position fixed to a control panel 30 may be spaced from the safety pin 150 in a circumferential direction. At this point, the circumferential direction is a rotational direction of the knob body NB. A structure of the locking groove 115 will be described in detail below.

The locking groove 115 may be omitted from the base portion 110. The locking groove 115 is omitted from the base portion 110, and a structure similar to the locking groove 115 may be directly formed in the front plate 31. As another example, when the base portion 110 is a part of the front plate 31, the locking groove 115 may also be a part of the front plate 31. As another example, the base portion 110 may have different polygonal shapes other than a disk shape.

A frame of the knob assembly 100 may be formed from the knob body NB. The knob body NB may surround the driving shaft 71 and the base portion 110. The knob body NB is a portion the user holds. In the embodiment, the knob body NB may include a first knob body 120 and a second knob body 130. The first knob body 120 may be exposed outwards. The second knob body 130 may be disposed inside the first knob body 120.

In the embodiment, the first knob body 120 may be exposed outwards and be a portion by which the user manipulates the knob assembly 100. The second knob body 130 may be disposed inside the first knob body 120, and be responsible for the connection to other parts, and guide an elastic member S to be described below. As another example, the first knob body 120 and the second knob body 130 may be integrally formed with each other.

The first knob body 120 may include a knob ring 121 having a conical or cylindrical shape. The knob ring 121 is disposed to face the front plate 31. A grippable part 123 may protrude from an upper surface 122 of the knob ring 121. The grippable part 123 protrudes from the upper surface 122 of the knob ring 121 in the axial direction. The grippable part 123 may be a portion where the user grips. The grippable part 123 may extend lengthily in a direction perpendicular to the axial direction (referring to Z-axial direction in FIG. 2). Reference numeral 123a is a reference marking formed in the grippable part 123. Not shown in the drawing, a marking may also be marked on a surface of the knob ring 121.

A operating hole 125 may be formed through the knob body NB in the direction perpendicular to the axial direction. The operating portion 143 of the operating button 140 is exposed outwards through the operating hole 125, and may form the exterior part of the knob assembly 100 with the knob body NB. As shown in FIG. 2, the operating portion 143 that is a portion of the operating button 140 protrudes from the knob body NB and may form the exterior part of the knob assembly 100 with the knob body NB. In other words, it may be considered that a portion of the operating button 140 fills the operating hole 125.

In the embodiment, the operating hole 125 where the operating portion 143 of the operating button 140 protrudes may be formed through the first knob body 120. More specifically, the operating hole 125 is formed through the grippable part 123 of the first knob body 120. At this point, since the operating hole 125 is formed in the direction perpendicular to the axial direction, the operating portion 143 of the operating button 140 may also protrude through the operating hole 125 in the direction perpendicular to the axial direction. In other words, the operating hole 125 may be open in the direction perpendicular to the linearly moving direction of the knob body NB.

The operating hole 125 may be formed one of left and right surfaces of the first knob body 120. In the embodiment, the operating hole 125 may be formed on the left surface of the first knob body 120. In the embodiment, the knob assembly includes only one operating button 140, and the operating hole 125 only needs to be formed on one surface of the first knob body 120. As another example, the operating hole 125 may be formed on the right surface of the first knob body 120. As another example, the operating hole 125 may be formed each of the right and left surfaces of the first knob body 120.

As described below, the operating button 140 may be restricted from being moved because it interferes with an edge 125a of the operating hole 125 in a process of moving the operating button from a second position to a first position. The operating button 140 is caught by the edge 125a of the operating hole 125, which allows the operating button 140 to stay at an inner space 121a formed in the first knob body 120 without being completely separated from the knob body NB and. The edge 125a of the operating hole 125 may be a holding end 125a. The first position and the second position of the operating button 140 will be described in detail below.

The second knob body 130 may be disposed at the inner space 121a of the first knob body 120. The second knob body 130 may be coupled to the first knob body 120 with a fastener B1. The fastener B1 passes through a weight plate 160 and the second knob body 130 successively, and then may be fixed to an assembly hole 124 of the first knob body 120. Accordingly, the first knob body 120, the second knob body 130, and the weight plate 160 may be assembled with each other and operated together.

The second knob body 130 may include a shaft coupling part 131 to which an end portion of the driving shaft 71 is coupled. The shaft coupling part 131 may have a cylindrical shape. The shaft coupling part 131 may be disposed at a center portion of the knob body NB. The shaft coupling part 131 includes a shaft coupling hole 132, and the driving shaft 71 may be inserted into the shaft coupling hole 132. A cross section of the shaft coupling hole 132 and a cross section of the driving shaft 71 may have a 'D' shape. Accordingly, the driving shaft 71 may be fixed in the shaft coupling hole 132 without spinning with no traction in the shaft coupling hole 132.

When an end portion of the driving shaft 71 is inserted into the shaft coupling hole 132, the driving shaft 71 may be rotated with the second knob body 130, and moved with the second knob body 130 in the axial direction. In other words, when the second knob body 130 is driven with the first knob body 120, the driving shaft 71 may be driven. For example, when the second knob body 130 is pushed with the first knob body 120 in the axial direction, the driving shaft 71 is also moved in the axial direction. When the second knob body 130 is rotated on the driving shaft 71 with the first knob body 120, the driving shaft 71 is also rotated with the knob bodies. Therefore, the driving shaft 71 may be a rotation shaft.

The second knob body 130 may be coupled to the driving shaft 71 and coupled to the weight plate 160. As described above, the second knob body 130 is implemented with the coupling structure with other parts, which forms the first knob body 120 to have a relatively simple thin structure. Therefore, when the first knob body 120 is formed in the injection molding, it is possible to prevent phenomenon of sink mark or flow mark from being occurring as a portion of the first knob body 120 is contracted due to a complex form.

The second knob body 130 may include a body plate 133. The body plate 133 may have a plate structure. The shaft coupling part 131 is connected to the body plate 133. The body plate 133 is a portion coupled to the first knob body 120 and the weight plate 160. To this end, the body plate 133 includes a fastener passing hole 134 formed therethrough, and the fastener B1 passes through the fastener passing hole 134. As shown in FIG. 4, a plate protrusion 137 is provided on the body plate 133, and the plate protrusion 137 is in close contact with a surface of the weight plate 160. As another example, the second knob body 130 and the first knob body 120 may be forcibly inserted to each other or fixed to each other with an adhesive.

In the embodiment, the body plate 133 may have a semicircular form to correspond to the form of the inner space 121a. In other words, a portion of a side surface of the second knob body 130 facing the inner space 121a has a curved surface form, and the other portion of the side surface of the second knob body 130 facing the operating button 140 may have a flat surface form. The portion having a curved surface form faces an inner surface of the inner space 121a, and the portion having a flat surface form faces the operating button 140. A portion of the operating button 140 may interfere with the flat surface portion of the second knob body 130. The operating button 140 interferes with the flat surface portion of the second knob body 130, so that a moving distance from the first position to the second position may be restricted.

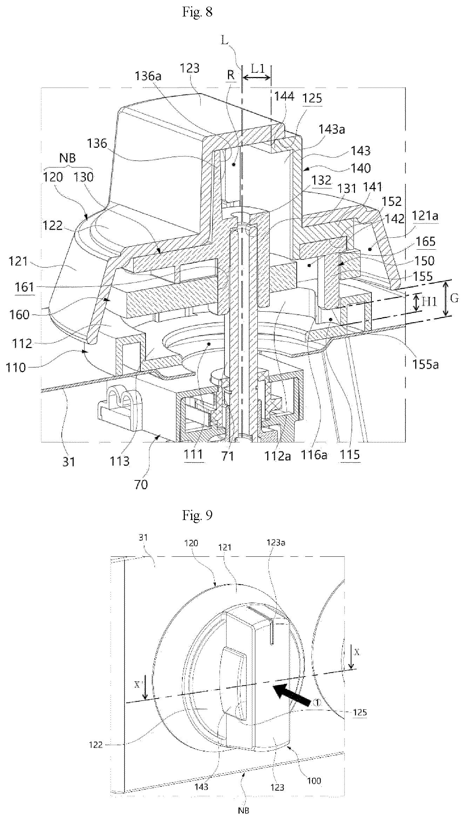

The second knob body 130 may include a support plate 136. The support plate 136 may protrude in the axial direction toward the opposite side of the base portion 110. The support plate 136 may protrude from the body plate 133 into a plate form. The support plate 136 may extend in the same direction as the grippable part 123, i.e., in the direction perpendicular to the axial direction. An end portion of the support plate 136 may be brought into close contact with the inner surface of the first knob body 120, i.e., with an inner surface of the grippable part 123. This state is shown in FIG. 8.

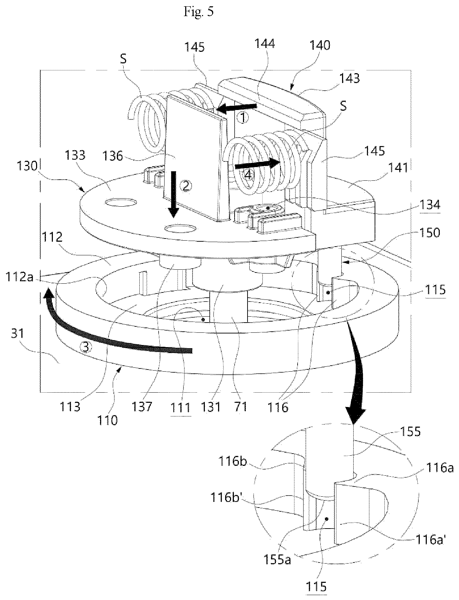

The support plate 136 may be disposed between a pair of elastic members S, which will be described below. As shown in FIG. 5, the support plate 136 is disposed between the pair of elastic members S, and may maintain an interval between the pair of elastic members S. In other words, the support plate 136 may prevent the pair of elastic members S from being twisted in either direction in a contracting/recovery process.

A portion of the second knob body 130 without the shaft coupling part 131, and the operating button 140 may be disposed opposite each other centered on the shaft coupling part 131. More specifically, the body plate 133 and the operating button 140 may be disposed opposite each other centered on the driving shaft 71. As shown in FIG. 8, based on the driving shaft 71, the body plate 133 is disposed at the left part, and the operating button 140 is disposed at the right part. Thereafter, this prevents the center of gravity of the knob assembly 100 from leaning toward either part due to the operating button 140. Furthermore, in the inner space 121a, the body plate 133 fills the empty space at one side without the operating button 140, which can improve the overall durability of the knob assembly 100. For reference, in FIG. 8, the reference numeral 'L' indicates an imaginary central line extending from the center of the driving shaft 71 in the axial direction.

As shown in FIGS. 3 and 4, the knob assembly 100 includes the operating button 140. The operating button 140 is disposed at the knob body NB and may be dependent on a movement of the knob body NB. Fundamentally, when the knob body NB is linearly moved in the axial direction or rotated on the driving shaft 71, the operating button 140 may be linearly moved or rotated with the knob body NB. However, the operating button 140 may be moved in a different direction from the axial direction independently from the knob body NB.

The operating button 140 may form a portion of a grippable surface that the user grips when the user grips the knob assembly 100. For example, when the user grips the knob assembly 100 with a thumb and a fore finger, the fore finger holds the surface of the grippable part 123 and simultaneously the thumb grips the operating portion 143 of the operating button 140. In this state, when the user pressurizes the knob assembly 100 with the thumb and the fore finger, although the surface of the grippable part 123 is fixed, the operating portion 143 located opposite thereto is pressed and moved into the knob body NB.

As shown in FIG. 5, the operating button 140 may be disposed, based on the shaft coupling part 131, opposite to a remaining portion excluding the shaft coupling part 131 from the second knob body 130. More specifically, the body plate 133 and the operating button 140 may be disposed opposite each other centered on the driving shaft 71.

The operating button 140 may restrict the knob body NB, the weight plate 160, and the operating button 140 constituting the knob assembly 100 from being moved in the axial direction, i.e., toward the control panel 30, or release restriction of movement. The operating button 140 may include a first position in which the operating button interferes with the base portion 110 to restrict movement in the axial direction, and a second position in which the operating button is enabled to be moved in the axial direction.

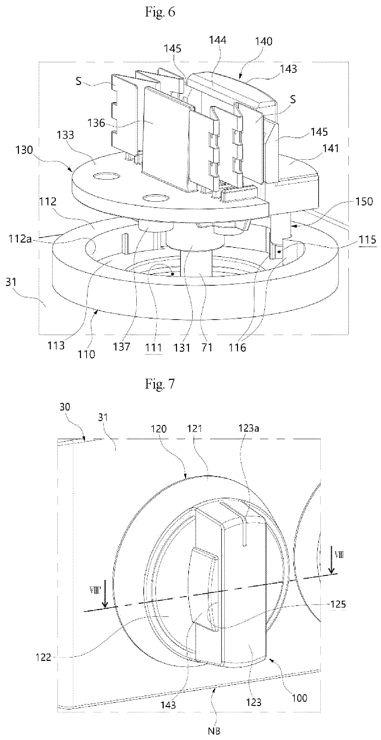

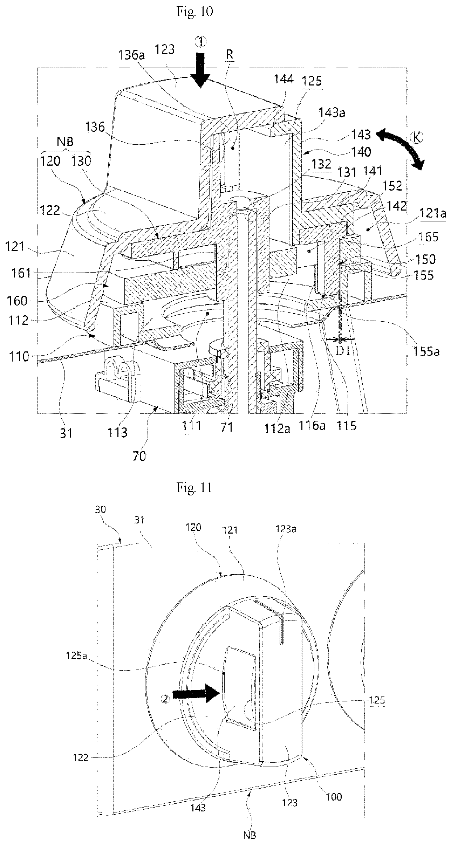

At this point, the first position is a state in which the operating button 140 protrudes relatively on the knob body NB, and is a state shown in FIGS. 7 and 8. At the first position, the operating button 140 is disposed far away from the driving shaft 71 in the radial direction. At the same time, the first position is a position in which a safety pin 150 is located at the farthest location from the driving shaft 71 in the radial direction. The second position is a location where the operating button 140 is moved when being pressed from the first position, and is the state shown in FIGS. 11 and 12. At the second position, the operating button 140 is disposed close to the driving shaft 71 in the radial direction. At the same time, the second position is a location where the safety pin 150 is disposed closest to the driving shaft 71 in the radial direction.

At the first position, the operating button 140 may interfere with the base portion 110 in the rotational direction. At this point, interference means restriction to the rotation of the operating button 140. As described above, when the operating button 140 interferes with the base portion 110 in the rotational direction, the operating button 140 is prevented from being relatively rotated with respect to the control panel 30 in the rotational direction, or the rotational angle is restricted. As described below, the safety pin 150 may allow the operating button 140 to interfere with the base portion 110.

At this point, the knob body NB, the operating button 140, and the safety pin 150 are restricted by each other in the axial direction and the rotational direction so that the knob body NB, the operating button 140, and the safety pin 150 may be linearly moved in the axial direction or rotated together. The safety pin 150 and the knob body NB are restricted by each other in the axial direction and the rotational direction, so when rotation of the safety pin 150 is restricted, rotation of the entire knob body NB is restricted.

At this point, the operating button 140 and the safety pin 150 may be linearly moved between the first position and the second position in a direction different from the axial direction. In the embodiment, the safety pin 150 may reciprocate between the first position and the second position while being moved in the direction perpendicular to the axial direction. As another example, the operating button 140 may be moved in an oblique direction or moved along a curved path while having a predetermined angle with respect to the axial direction.

FIGS. 7 and 8 are views showing the operating button 140 located at the first position. FIGS. 9 and 10 are views showing the knob body NB moved in the axial direction. FIGS. 11 and 12 are views showing the operating button 140 pressed while the knob body NB is moved in the axial direction.

As shown in FIGS. 11 and 12, when the operating button 140 at the first position is pressed, the operating button 140 may be moved to the second position. When an external force pressing the operating button 140 is removed, the operating button 140 at the second position may be returned to the first position by the elastic members S.

As shown in FIG. 8, at the first position, the operating button 140 and the base portion 110 may be spaced from each other in the axial direction at a first raising and lowering height H1. More specifically, in the embodiment, when the operating button 140 is located at the first position, an end surface 155a of the pin part 155 and a button of the base portion 110 are spaced from each other at the first raising and lowering height H1. The first raising and lowering height H1 may be a distance to allow the pin part 155 to be moved in the axial direction. For reference, the reference numeral G indicates a distance (height) between the knob body NB and the front plate 31 spaced from each other.

In the embodiment, the depth of the axial direction of the locking groove 115 may be longer than the first raising and lowering height H1 of the safety pin 150. Accordingly, regardless of raising and lowering movement in the axial direction of the safety pin 150, when the pin part 155 is located at the first position, the safety pin interferes with the locking groove 115, and thus the safety pin is not rotated or has a limited rotational angle. FIG. 8 is a view showing the pin part 155 located at the uppermost position in the axial direction, and even when the pin part 155 is located at the uppermost portion, the pin part 155 may remain inserted into the locking groove 115.

As described above, at the first position, the pin part 155 is inserted into the locking groove 115. Therefore, the safety pin 150 including the pin part 155 is caught by the locking groove 115, so that the safety pin 150 is not rotated or has a restricted rotational angle. At this point, rotation of the safety pin 150 means rotation on the driving shaft 71. When the safety pin 150 is not rotated, the entire knob body NB rotated with the safety pin 150 while being restricted by the safety pin 150 is not rotated, and thus the heating driving part 70 is not activated.

As shown in FIGS. 9 and 10, at the first position, the operating button 140 is pressed in the axial direction, the pin part 155 is brought into contact with the button of the base portion 110. The pin part 155 is caught by the locking groove 115 so as not to be rotated, but is movable in the axial direction. When the knob body NB is pressed in the direction of the arrow ① in FIGS. 9 and 10, the knob body NB, the operating button 140, and the safety pin 150 may be moved in the axial direction. For reference, in FIG. 10, the arrow K indicates a rotational direction of the knob body NB.

At this point, the pin part 155 and an inner surface of the locking groove 115 may be spaced from each other by a first distance D1. The first distance D1 (referring to FIG. 10) is a distance in which the pin part 155 is inserted into the locking groove 115 to allow rotation of the pin part 155 to be locked. When the first distance D1 is 0, at the first position, an outer circumferential surface of the pin part 155 and an inner circumferential surface of the locking groove 115 may be brought into close contact with each other. As another example, the first distance D1 may be greater than 0.

In this state, when the operating button 140 is pressed in the direction of the arrow ② in FIGS. 11 and 12, the safety pin 150 may be moved to the second position to release the locked state. As shown in FIG. 12, an outer circumferential surface of the safety pin 150 and the inner circumferential surface of the locking groove 115 in the radial direction may be spaced from each other by a second distance D2. The second distance D2 may be formed farther than the first distance D1. When the safety pin 150 is moved in the direction of the arrow ②, i.e., toward the driving shaft 71, to secure the second distance D2, the safety pin 150 is enabled to be rotated by being separated from the locking groove 115.

A radial distance L1 (referring to FIG. 8) between the operating portion 143 and the driving shaft 71 at the first position may be farther than the radial distance L2 (referring to FIG. 12) between the operating portion 143 and the driving shaft 71 at the second position. In other words, when the operating button 140 is moved to the second position, the radial distance between the operating button 140 and the driving shaft 71 is shortened. At this point, the radial distance is a direction from the driving shaft 71 toward an edge of the knob body NB.

As shown in FIG. 8, the radial distance L1 between the operating portion 143 at the first position and the driving shaft 71 may be a distance between a protruding end 144 protruding from the operating portion 143 of the operating button 140 and a central line L extending from the driving shaft 71. Likewise, as shown in FIG. 12, the radial distance L2 between the operating portion 143 and the driving shaft 71 at the second position may be a distance between a protruding end 144 protruding from the operating portion 143 of the operating button 140 and a central line L extending from the driving shaft 71.

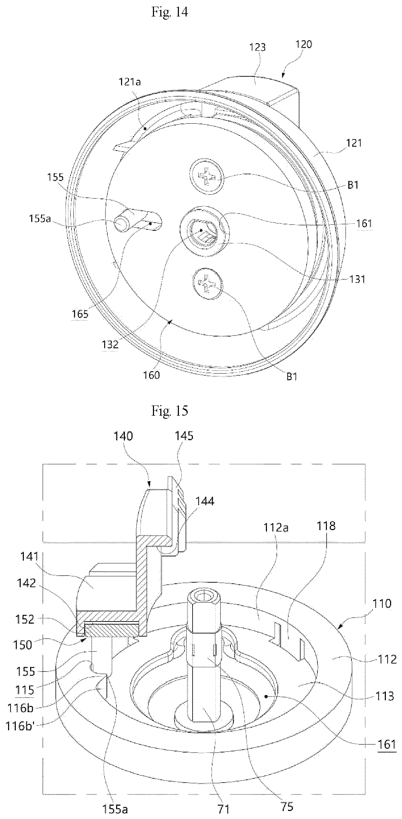

FIGS. 14 and 15 are views showing a position of the pin part 155 at the first position. For reference, FIGS. 14 and 15 show the pin part 155 passing through a pin passing hole 165 of the weight plate 160. As shown in the drawings, at the first position, the pin part 155 is disposed at an end portion of the pin passing hole 165. At this point, the end portion of the pin passing hole 165 may be the portion farthest from the shaft coupling part 131 in the radial direction.

When describing a structure of the operating button 140 with reference to FIG. 15, the operating button 140 may include a button body 141. The button body 141 may be inserted into the inner space 121a. The button body 141 may extend in a direction perpendicular to the axial direction. A side surface of the button body 141 may have a form of curved surface to correspond to the inner surface of the inner space 121a.

The button body 141 may include a pin coupling part 142 at a lower portion. The pin coupling part 142 is a portion to which the safety pin 150 is coupled. The safety pin 150 may be assembled to the pin coupling part 142. The pin block 152 provided in the safety pin 150 may be coupled to the pin coupling part 142 in a sliding manner in the direction perpendicular to the axial direction. As another example, the pin block 152 of the safety pin 150 may be bonded to the pin coupling part 142. As another example, the pin block 152 of the safety pin 150 may be screw-fastened to the pin coupling part 142.

The button body 141 may include the operating portion 143. The operating portion 143 may extend in a direction of standing the operating portion on the button body 141. At this point, the standing direction is a vertical direction based on FIG. 15. The operating portion 143 may be a portion that the user pushes to manipulate the button body 141. The grippable surface may be formed by at least a part of the operating portion 143 exposed through the operating hole 125 outwards of the knob assembly 100.

Referring to FIG. 8, the surface 143a of the operating portion 143 and the surface 136a of the support plate 136 of the second knob body 130 may be disposed to face each other. A predetermined empty space R is formed between the surface 143a of the operating portion 143 and the surface 136a of the support plate 136, and the empty space is an available space to enable the operating portion 143 of the operating button 140 to be moved.

The operating portion 143 may include a protrusion end 144. The protrusion end 144 may extend from the operating portion 143 in the direction perpendicular to the direction in which the operating portion 143 extends from the button body 141. The protrusion end 144 may expand a contact area between the surface of the operating portion 143 and the surface of the knob body NB. As shown in FIG. 8, an upper surface of the protrusion end 144 and a lower surface of the first knob body 120 forming the knob body NB are in contact with each other. The protrusion end 144 enables the operating button 140 to be moved stably in a constant direction (left-right direction based on FIG. 8).

As shown in FIG. 5, the operating portion 143 may include an elastic supporter 145. The elastic supporter 145 supports an end portion of the elastic member S. The elastic supporter 145 is provided at each side of the operating portion 143, supporting the end portion of the elastic member S. The elastic supporter 145 may protrude more toward the center of the inner space 121a than the operating portion 143. A surface of the elastic supporter 145 may have a flat surface structure.

In the embodiment, the pair of elastic supporters 145 is disposed more outward than the support plate 136 of the second knob body 130. The elastic member S is disposed on either side of the support plate 136. The pair of elastic members S may be respectively supported by the pair of elastic supporters 145. Accordingly, when the ends of the pair of elastic members S1 are supported by the pair of elastic supporters 145, and the support plate 136 may maintain an interval between the pair of elastic members S.

As shown in FIG. 5, the elastic members S may provide elasticity to the operating button 140 in a direction of moving the operating button 140 to the first position. In the embodiment, the elastic member S may be made of a coil spring. In the embodiment, the elastic member S are disposed at the opposite sides of the support plate 136. The pair of elastic members S enables the operating button 140 to reciprocate in a constant direction without leaning or twisting in one direction.

The opposite end portions of each elastic member S may be supported by the surface of the knob body NB and the surface of the operating button 140 disposed to face each other. More specifically, first end portions of the elastic members S are supported by the elastic supporters 145, and second end portions of the elastic members S may be supported by the inner surface of the first knob body 120.

For reference, FIG. 6 shows another embodiment of the elastic member S. As shown in the drawing, the elastic member S may be made of an elastic material such as a leaf spring. When the elastic member S is made of a leaf spring, the elastic member S may have expanded areas where the opposite end portions of the elastic member S are supported by the surface of the knob body NB and the surface of the operating button 140.

As shown in FIG. 15, the operating button 140 may allow the safety pin 150, which interferes with or is released from interference with the base portion 110, to be operated in conjunction. In the embodiment, the operating button 140 interferes with the locking groove 115 of the base portion 110. The safety pin 150 may include the pin part 155 protruding from the operating button 140 toward the base portion 110 in the axial direction. The pin part 155 of the safety pin 150 may be a cantilever structure. At the first position, the pin part 155 may be a portion substantially interfering with the locking groove 115.

The knob body NB may be linearly moved in the first direction that is the axial direction, and the safety pin 150 may be linearly moved between the first position and the second position in the second direction different from the first direction. At this point, the pin part 155 of the safety pin 150 may protrude in the first direction. When the safety pin 150 is moved in the second direction different from the first direction, the safety pin 150 is moved independently from the knob body NB.

The safety pin 150 may interfere with the locking groove 115 of the base portion 110. At the first position, the locking groove 115 may interfere with the safety pin 150 in the circumferential direction. At the second position, the safety pin 150 may be separated from the locking groove 115 so as to be released from interference. As described above, depending on the position of the safety pin 150, the safety pin 150 may interfere with the locking groove 115 or be released from interference with the locking groove 115. In the embodiment, a change in the position of the safety pin 150 may be dependent on a movement of the operating button 140. This structure will be described below.

The safety pin 150 may include the pin block 152. The pin block 152 is a portion coupled to the pin coupling part 142 and has a plate structure. The pin part 155 of the safety pin 150 protrudes from the pin block 152 in the axial direction. The pin block 152 may be made of a material different from the operating portion 143 of the operating button 140. For example, the safety pin 150 where an external force is concentrated when the user presses the knob assembly 100 in the axial direction may be made of a metal material having relatively excellent durability. As another example, the pin block 152 is omitted, and the pin part 155 may be coupled directly to the pin coupling part 142.

The safety pin 150 may be fixed to the pin coupling part 142 of the operating button 140 through the pin block 152. The safety pin 150 fixed to the pin coupling part 142 may be dependent on the movement of the operating button 140. In other words, the safety pin 150 may be moved with the operating button 140 in the axial direction and rotated on the driving shaft 71.

As another example, the safety pin 150 is omitted, a protrusion (not shown) may be provided directly on the operating button 140. A portion of the operating button 140 may protrude in the first direction i.e., the axial direction, to form the protrusion. As another example, the operating button 140 may be a portion of the safety pin 150.

When describing operations of the knob body NB and the operating button 140 with reference to FIG. 5, the operating button 140 may be pressed in the direction of the arrow ①. When the operating button 140 is pressed in the direction of the arrow ①, the operating button 140 is moved from the first position to the second position. For reference, In FIG. 5, the operating button 140 is disposed at the first position so that the movement thereof in the axial direction is restricted. When the operating button 140 is moved in the direction of the arrow ①, excluding the base portion 110, the knob assembly 100 including the second knob body 130 may be moved in the axial direction (direction of arrow ②).

The knob assembly 100 moved in the axial direction as described above may be rotated in the direction of the arrow ③. At this point, with the second knob body 130, the first knob body 120, and the operating button 140 may also be rotated. The second knob body 130 may be rotated in a direction opposite to the direction of the arrow ③. Meanwhile, when the user removes the force of pressing the operating button 140, the operating button 140 may be moved in the direction of the arrow ④ and returned to the first position by the elastic member S.

Referring to FIGS. 3 and 4, the weight plate 160 may be coupled to the knob body NB, and rotated and moved with the knob body NB. The weight plate 160 may have a disk structure to correspond to the inner space 121a. The weight plate 160 increases the total weight of the knob assembly 100, thereby improving control of the knob assembly 100. To this end, the weight plate 160 may be made of a metal material.

A shaft passing hole 161 may be formed through a central portion of the weight plate 160, and the driving shaft 71 may be inserted into the shaft passing hole 161. The driving shaft 71 passing through may be coupled to the shaft coupling part 131. A plate fastening hole 164 may be formed through around the shaft passing hole 161, and the fastener B1 may pass through the plate fastening hole 164.

The weight plate 160 may have the pin passing hole 165 formed therethrough. The rear fastening hole 87 may be a portion through which the door fastener B2 passes. At this point, the pin part 155 should be moved from the first position to the second position, so the pin passing hole 165 may extend in the radial direction of the weight plate 160. The pin part 155 may be moved from the first position to the second position while inserted in the pin passing hole 165. Therefore, the pin passing hole 165 may have a long hole structure.

FIGS. 7 to 13 show the operation of the parts constituting the embodiment successively. First, as shown in FIGS. 7 and 8, the views show the operating button 140 located at the first position. When the operating button 140 is located at the first position, the operating portion 143 protrudes outward of the operating hole 125. When the operating button 140 is located at the first position, the safety pin 150 is inserted into the locking groove 115 of the base portion 110 so that rotation of the safety pin 150 is restricted.

In this state, the user can press the knob body NB in the direction of the arrow ① in FIGS. 9 and 10. Although the safety pin 150 is inserted into the locking groove 115 of the base portion 110 to prevent rotation of the knob body NB, the knob body NB may be moved in the axial direction. Therefore, the user may press the knob body NB in the axial direction, more specifically, toward the front plate 31.

As shown in FIG. 10, compared to FIG. 8, the view shows the knob body NB, the safety pin 150, and the weight plate 160 moved closer to the front plate 31. The safety pin 150 may be moved closer to the button of the locking groove 115 in the axial direction. Then, a gap between a lower end of the knob body NB and the front plate 31 is also reduced.

Next, when the user presses the operating portion 143 in the direction of the arrow in FIG. 11, the operating button 140 may be inserted into the knob body NB. At this point, the user should press the operating portion 143 while overcoming the elastic force of the elastic member S. Then, the operating button 140 may be moved to the second position. As described above, the operating button 140 protruding sideways may be pressed naturally when the user grips the knob body NB. Therefore, even when the operating button 140 is added, the ease of assembly of the knob assembly 100 is not deteriorated, and the user can easily control the cooking apparatus.

As shown in FIG. 12, the safety pin 150 is moved in the radial direction and disposed at a location where the safety pin is separated from the locking groove 115 of the base portion 110. At this point, the separated position means that the pin part 155 of the safety pin 150 is not surrounded by the locking groove 115. Therefore, the safety pin 150 may be rotated in the circumferential direction without interference with the locking groove 115. In FIG. 12, D2 indicates a distance in which the safety pin 150 is separated from the locking groove 115.

As described above, in the embodiment, the operating button 140 may be operated in a different direction from the shaft-directional movement of the knob body NB. When the direction of pressing the operating button 140 and the direction of pressing the knob body NB are formed different, it is less likely that the user accidentally operates the knob assembly 100. At this point, the user can perform a movement of holding the grippable part 123 and pressing the knob body NB in the axial direction and a movement of pressing the operating button 140 in the direction perpendicular to the axial direction, at the same time. In other words, the user can press the knob body NB in the direction of arrow ① in FIG. 9 and press the operating button 140 in the direction of arrow ② in FIG. 11, at the same time. Otherwise, the user can press the operating button 140 in the perpendicular direction thereto and then press the knob body NB in the axial direction. Even when the user manipulates 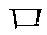 the knob assembly in any order, the knob assembly 100 may eventually be in the state shown in FIG. 12.

More specifically, the operating portion 143 of the operating button 140 may be linearly moved in the second direction (leftward-rightward direction in FIG. 10) different from the axial direction (first direction, vertical direction in FIG. 10), i.e., the linearly moving direction of the knob body NB, and the rotational direction of the knob body NB (direction of arrow K in FIG. 10). Accordingly, this further reduces the probability of the knob assembly 100 actuated randomly due to user error or interference with objects around the cooking apparatus.

When the knob body NB, the operating button 140, and the weight plate 160 are moved in the axial direction, the second knob body 130 fixing the driving shaft 71 through the shaft coupling part 131 may move the driving shaft 71 together in the axial direction. The driving shaft 71 moved in the axial direction may drive the heat driving part 70 of the cooking apparatus by rotation. At this point, driving of the heating driving part 70 includes various types of operations such as on/off of the cooking apparatus, cooking mode selection of the cooking apparatus, and the like.

When the driving shaft 71 is moved in the axial direction by a reference distance, the driving shaft 71 may be rotated. In the embodiment, the heating driving part 70 restricts that the driving shaft 71 should be moved by the reference distance in the axial direction to be rotated. FIG. 13 illustrates the knob body NB rotated clockwise, and the driving shaft 71 may also be rotated clockwise with the knob body NB. As described above, when the knob body NB is rotated, the operating button 140 may be moved to a third position. At this point, when the driving shaft 71 is rotated together by the knob body NB, it is possible to implement functions such as fire control of the cooking apparatus, the number of activated heating devices 28, selection of cooking modes, and the like.

As described above, in the embodiment, the operation of the safety pin 150 precedes the rotation of the knob body NB. The operating button 140 and the safety pin 150 should be moved in the second position for the knob body NB to be rotated, and in this process, the driving shaft 71, which is dependent on the knob body NB, may be rotated together.

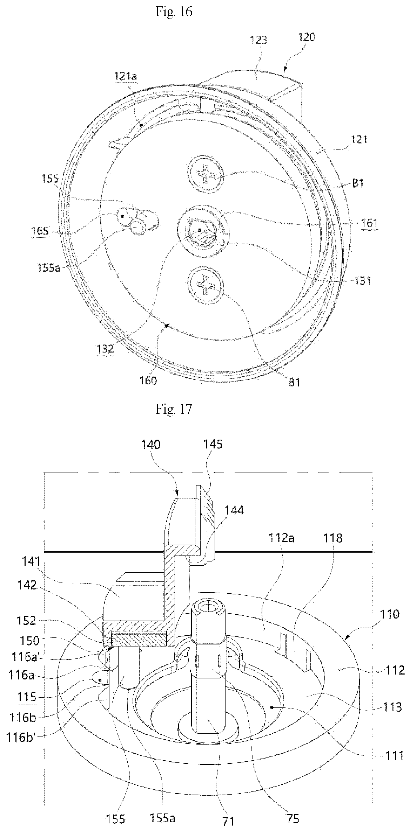

The structure and the operation of the safety pin 150 will be described in detail. FIGS. 14 to 17 show the safety pin 150 located at the first position and the second position. More specifically, FIGS. 14 and 15 show the safety pin 150 located at the first position, and FIGS. 16 and 17 show the safety pin 150 located at the second position. As shown in FIGS. 14 and 15, the safety pin 150 may be located at a location relatively far away from the shaft coupling part 131 and the driving shaft 71. At this point, the safety pin 150 is inserted in the locking groove 115.

As shown in FIG. 15, the safety pin 150 is inserted into the locking groove 115, the safety pin 150 may not be rotated on the driving shaft 71. In the embodiment, the safety pin 150 may not be rotated in both directions at the first position. At this point, both directions are clockwise and counterclockwise directions based on FIG. 15. Referring to FIG. 5, based on the locking groove 115, the guide parts 116 may be provided at either side of the locking groove 115, and support the safety pin 150 at the opposite sides.

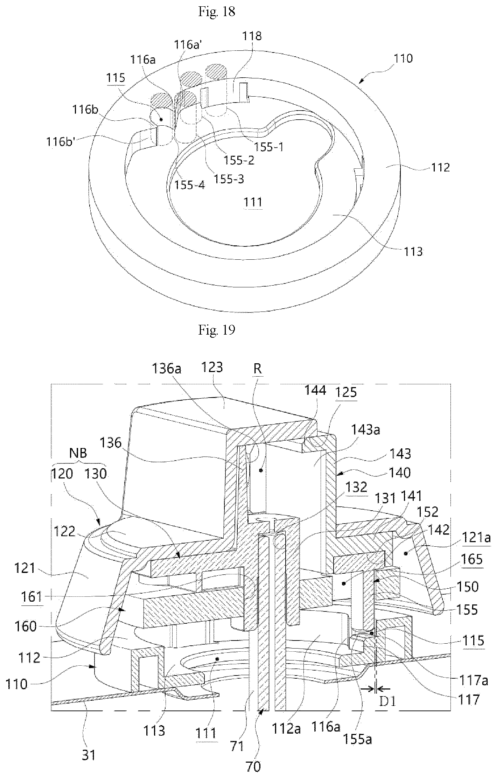

As shown in FIGS. 5 and 18, describing the structure of the base portion 110 including the locking groove 115 in detail, the base portion 110 may include a ring base body 112. When the base portion 110 is disposed on a front surface of the control panel 30, the base body 112 may protrude from a front surface of the control panel 30. The base body 112 may include a curved inner circumferential surface. The safety pin 150 may be rotated along the inner circumferential surface.

The base portion 110 may include a lower plate 113. The lower plate 113 may form a button plate of the base portion 110. The base hole 111 is formed through a central portion of the lower plate 113. The lower plate 113 may be formed in a thin plate structure. The pin part 155 of the safety pin 150 may be rotated while facing the lower plate 113. As another example, the lower plate 113 is omitted from the base portion 110, and the base body 112 may only be included.

At this point, the locking groove 115 may be formed in the base body 112. The locking groove 115 may be formed on the inner circumferential surface of the base body 112. At the inner circumferential surface of the base body 112, the locking groove 115 may be recessed from a central portion of the rotation path of the safety pin 150 in the radial direction of the rotation path. Since the safety pin 150 is inserted into the locking groove 115 and interferes, the locking groove 115 may be referred to as an interference part.

The locking groove 115 may be open toward the central portion of the rotation path of the safety pin 150. At this point, the rotation path of the safety pin 150 is a circular path formed with the driving shaft 71 as the rotation center. As shown in FIG. 18, the locking groove 115 is open in a direction of an imaginary central line passing vertically through a central portion of the base hole 111. Accordingly, the pin part 155 of the safety pin 150 may be separated from the locking groove 115 through an open side surface of the locking groove 115, or be inserted into the locking groove 115.

As shown in the enlarged portion of FIG. 5 and FIG. 18, the pair of guide parts 116a and 116b protruding from opposite portions of the locking groove 115 is shown. As shown in the drawings, the pair of guide parts 116a and 116b protrudes from opposite edges of the locking groove 115 in the radial direction, i.e., toward a central portion in which the driving shaft 71 is disposed. In other words, the pair of guide parts 116a and 116b protrudes toward the central portion of the rotation path of the safety pin 150. Therefore, the safety pin 150 is not rotated in both directions. The first guide part 116a of the guide parts 116a and 116b prevents the safety pin 150 from being rotated clockwise based on the drawing. The second guide part 116b of the pair of guide parts 116a and 116b prevents the safety pin 150 from being rotated counterclockwise based on the drawing.

As another example, the guide parts 116a and 116b may be provided at either portion of both edges of the locking groove 115. As another example, the guide parts 116a and 116b may be omitted. In this case, the locking groove 115 may be recessed from the inner circumferential surface of the base portion 110. More specifically, on the inner circumferential surface of the base portion 110, the locking groove 115 may be recessed from the central portion of the rotation path of the safety pin 150 in the radial direction of the rotation path. Since the elastic member S provides an elastic force to the operating button 140, the safety pin 150 may be inserted into the locking groove 115.

The guide parts 116a and 116b may have inclined or curved surfaces 116a' and 116b'. The inclined or curved surfaces 116a' and 116b' of the guide parts 116a and 116b may guide the safety pin 150 so that the safety pin 150 goes over the surfaces 116a' and 116b' of the guide parts 116a and 116b and is inserted into the locking groove 115 in the rotating process.

As shown in FIG. 18, the rotation path of the safety pin 150 is shown. The reference numerals 155-1 to 155-4 indicate movement trajectory of the safety pin 150. The safety pin 150 may be rotated counterclockwise along the inner surface of the base portion 110, i.e., the inner circumferential surface of the base body 112 (155-1 and 155-2). When the safety pin 150 is brought into contact with the guide part 116a, the safety pin 150 may be moved along the surface 116a' of the first guide part 116a toward the center portion of the base portion 110 (155-3). When the safety pin 150 is moved over the guide part 116a, the safety pin 150 may be inserted into the locking groove 115 (155-4).

Although not shown in the drawing, the base portion 110 may include multiple locking grooves 115 recessed from the central portion of the rotation path of the safety pin 150 in the radial direction of the rotation path. The multiple locking grooves 115 may be disposed to be spaced from each other along the rotation path. In the rotation process, the safety pin 150 may be inserted into one of the multiple locking grooves 115 and rotation thereof may be restricted. As another example, the multiple safety pins 150 are provided in the knob body NB, and the multiple safety pins 150 may be respectively inserted into the multiple locking grooves 115.

Meanwhile, referring to FIGS. 16 and 17 showing the second position of the safety pin 150, at the second position, the safety pin 150 is located at a location relatively closer to the shaft coupling part 131 and the driving shaft 71. At this point, the safety pin 150 may be separated from the locking groove 115. When the safety pin 150 is separated from the locking groove 115, the safety pin 150 may be rotated on the driving shaft 71.

Accordingly, based on FIG. 17, the safety pin 150 may be rotated both clockwise and counterclockwise. At this point, the safety pin 150 is moved by a distance longer than the length to which the guide parts 116a and 116b protrude in the radial direction, and then separated from the locking groove 115. Therefore, the safety pin 150 may be rotated without interfering with the guide parts 116a and 116b.

When the safety pin 150 is in a rotatable state, the safety pin 150 and the knob body NB restricted may also rotated. When the user rotates the knob body NB in the first rotational direction (referring to arrow ③ in FIG. 13), the driving shaft 71 restricted by the knob body NB is rotated and the heating driving part 70 is operated. The heating device 28 may be operated by the heating driving part 70. At this point, since the safety pin 150 is separated from the locking groove 115, the safety pin 150 may be rotated along the inner circumferential surface of the base portion 110.

Meanwhile, to stop the use of the heating device 28, the user can rotate the knob body NB in the opposite direction (direction opposite to arrow ③ in FIG. 13). Accordingly, the driving shaft 71 may also be returned to the original position, and the heating driving part 70 stops operation.

In this state, the safety pin 150 may be rotated along the inner circumferential surface of the base portion 110 and then go over the guide parts 116a and 116b and be reinserted into the locking groove 115. The above process was described with reference to FIG. 18 in advance. When the pin part 155 of the safety pin 150 is reinserted into the locking groove 115, the knob assembly including the safety pin 150 is prevented from being rotated, and is not rotated before pressing the operating button 140.

FIGS. 19 to 24 show another embodiment of the knob assembly according to the present disclosure. Hereinbelow, the description of the structure equal to the above-described embodiment will be omitted.

First, FIGS. 19 to 21 show sequentially the operational state of another embodiment of the knob assembly. As shown in the drawings, the base portion 110 includes a stepped part 117. The stepped part 117 protrudes from the bottom surface of the locking groove 115 toward the safety pin 150 in the axial direction. The stepped part 117 may reduce the shaft-directional depth of the locking groove 115 (vertical height based on FIG. 19). In other words, the stepped part 117 may be a portion protruding from a surface of the base plate 113.

When the operating button 140 is located at the first position, the stepped part 117 interferes with the safety pin 150 in the axial direction to restrict the shaft-directional movement of the safety pin 150. In other words, the inner circumferential surface of the locking groove 115 interferes with the outer circumferential surface of the safety pin 150 to interfere with rotation of the safety pin 150, and the stepped part 117 interferes with a surface of an end portion of the safety pin 150 in the axial direction to restrict a shaft-directional movement of the safety pin 150.

As shown in FIG. 19, at the first position, the end surface 155a of the pin part 155 faces a surface 117a of the stepped part 117. The end surface 155a of the pin part 155 overlaps with the surface 117a of the stepped part 117, which forms the bottom surface of the locking groove 115, in the axial direction, and the safety pin 150 may be supported by the surface 117a of the stepped part 117.

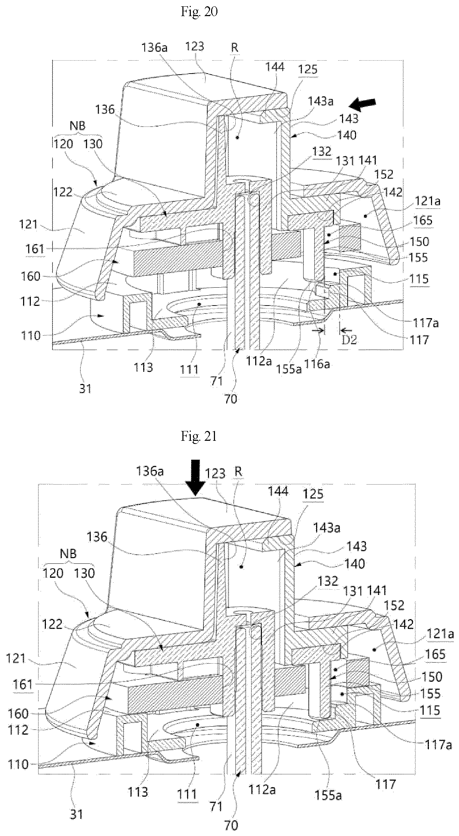

As shown in FIG. 20, at the second position, the safety pin 150 is completely separated from the locking groove 115. When the safety pin 150 is moved to the second position, the pin part 155 of the safety pin 150 is separated from the surface 117a of the stepped part 117 so that the safety pin 150 is movable in the axial direction. At the same time, the safety pin 150 is released from the state where the safety pin is surrounded by the inner circumferential surface of the locking groove 115, and the safety pin 150 is rotatable.

As described above, in the embodiment, the safety pin 150 may be moved with the operating button 140, and be linearly moved between the first position interfering with the shaft-directional movement and rotation and the second position of allowing the shaft-directional movement and rotation. At this point, the safety pin 150 interferes directly with the base portion 110 of the knob assembly 100 at the first position so that the shaft-directional moving distance is restricted. Therefore, the structure restricting the manipulation of the knob assembly 100 can be simply implemented.

As shown in FIG. 21, it is shown that the knob body NB pressed in the direction of arrow, i.e., in the axial direction. As described above, since the safety pin 150 is moved to the second position and is movable to the axial direction, the safety pin 150 may be lowered with the knob body NB and disposed closer to the lower plate 113 of the base portion 110. In this state, when the knob body NB is rotated, the safety pin 150 rotated along the inner circumferential surface of the base portion 110 has a phase different from the locking groove 115.

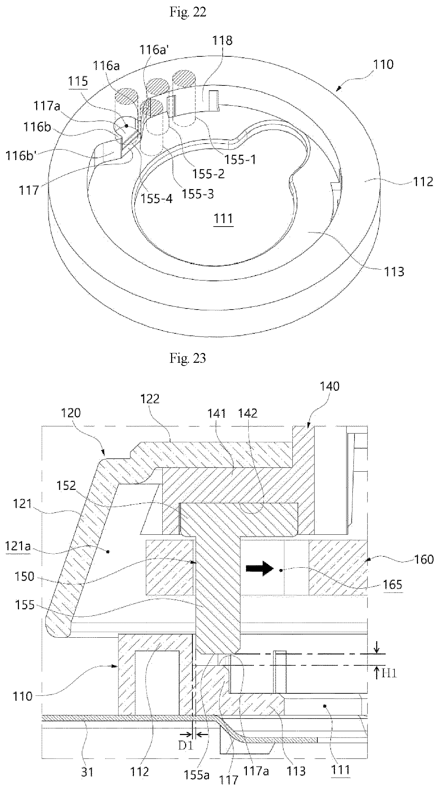

FIG. 22 shows a process in which the pin part 155 of the safety pin 150 is reinserted into the locking groove 115. As shown in FIG. 22, the rotation path of the safety pin 150 is shown. The reference numerals 155-1 to 155-4 indicate movement trajectory of the safety pin 150. The safety pin 150 may be rotated counterclockwise along the inner surface of the base portion 110 (155-1 and 155-2). When the safety pin 150 is brought into contact with the guide part 116a, the safety pin 150 may be moved along the surface 116a' of the first guide part 116a toward the center portion of the base portion 110 (155-3). When the safety pin 150 is moved over the guide part 116a, the safety pin 150 may be inserted into the locking groove 115 (155-4).

At this point, the safety pin 150 may be rotated while being spaced (raised) from the lower plate 113 of the base portion 110 and disposed on the surface 117a of the stepped part 117. When the safety pin 150 is rotated while being brought into close contact with the lower plate 113 of the base portion 110 (lowering), the moment the user removes the force of pressing the knob body NB in the axial direction, the safety pin 150 may be raised with the knob body NB in a direction protruding in the axial direction, and may be moved toward the locking groove 115 by the elastic force of the elastic member S.

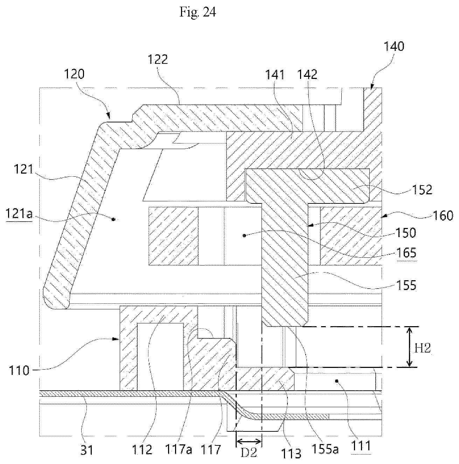

FIGS. 23 and 24 show a distance between the pin part 155 of the safety pin 150 and the locking groove 115. As shown in FIG. 23, when the safety pin 150 is located at the first position, the surface of the pin part 155 and the surface 117a of the stepped part 117 may be spaced from each other by the first raising and lowering height H1. At the same time, the outer circumferential surface of the pin part 155 is spaced from the inner circumferential surface of the locking groove 115 by the first distance D1. At this point, the rotational angle and lowering height of the safety pin 150 are limited. At this point, when the operating button 140 is pressed, the safety pin 150 is moved in the direction of the arrow shown in FIG. 23.

FIG. 24 shows the safety pin 150 located at the second position. When the safety pin 150 is located at the second position, the surface of the pin part 155 and the surface 117a of the stepped part 117 may be spaced from each other by a second raising and lowering height H2. At this point, the second raising and lowering height H2 is the height at which the pin part 155 can be lowered, and is higher than the minimum height at which the driving shaft 71 can operate the heating driving part 70. Since the safety pin 150 can be lowered in the axial direction, as the knob body NB is moved in the axial direction, the driving shaft 71 may be pressed.

At the same time, the outer circumferential surface of the pin part 155 is spaced from the inner circumferential surface of the locking groove 115 by the second distance D2. Accordingly, the safety pin 150 may be separated from the locking groove 115 and rotated. More specifically, the pin part 155 of the safety pin 150 may be rotated at an angle greater than the minimum angle at which the driving shaft 71 can operate the heating driving part 70. Therefore, when the user presses the knob body NB in the axial direction and rotates the knob body NB at the same time, the driving shaft 71 may be rotated and implement various functions with the heating driving part 70.

Not shown in the drawings, the safety pin 150 may be omitted from the operating button 140, and the operating button 140 may include the safety groove. The locking groove 115 may be omitted from the base portion 110, and the lock pin may protrude from the locking groove 115. The lock pin may protrude in the radial direction of the rotation path of the knob body NB. In this case, when the operating button 140 is located at the first position, the lock pin of the base portion 110 is inserted into the safety groove of the operating button 140, thereby restricting movement of the knob body NB.

Meanwhile, not shown in the drawings, the elastic member S may be omitted in the knob assembly 100. In this case, the user can move the operating button 140 from the second position to the first position. The user can pull the operating button 140 or return the operating button 140 to the first position while gripping a separate grippable structure (not shown) provided in the operating button 140.

Not show in the drawings, the knob body NB may include a protrusion structure having a form symmetric to the operating portion 143, at a portion opposite to the operating portion 143, based on a central portion of the knob body NB. The protrusion structure protrudes to be symmetric to the operating portion 143, increasing the user's grip.

The preceding embodiments has been described with the knob assembly 100 applied to the cooking apparatus as an example, but the knob assembly 100 may be applied to various electronics, including refrigerators, washers, dryers, hair dryers, Stylers, air conditioners, blenders, dishwashers, and the like.

## Claims

1. A knob assembly comprising:
a base portion (110) disposed at a control panel (30);
a driving shaft (71) protruding from the control panel (30);
a knob body (NB) configured to rotate about the driving shaft (71) and configured to move linearly in an axial direction along the driving shaft (71); and
an operating button (140) having an operating portion (143) exposed externally of the knob body (NB) and configured to move in a direction different from the axial direction,
wherein the operating button (140) has:
(i) a first position at which the operating button (140) interferes with the base portion (110) to restrict rotation of the knob body (NB); and
(ii) a second position, displaced from the first position in a direction different from the axial direction, at which interference between the operating button (140) and the base portion (110) is released to allow rotation of the knob body (NB).

2. The knob assembly of claim 1, wherein the operating portion (143) and the driving shaft (71) are spaced from each other in a radial direction of a rotation path by the knob body (NB), and
a radial distance between the operating portion (143) at the first position and the driving shaft (71) is longer than a radial distance between the operating portion (143) at the second position and the driving shaft (71).

3. The knob assembly of claim 1, or 2, wherein the operating button (140) is moved between the first position and the second position in the direction different from the axial direction along a linear path or a curved path, and
when the knob body (NB) is rotated on the driving shaft (71), the operating button (140) is rotated along the knob body (NB) and is moved to a third position.

4. The knob assembly of claim 1, 2, or 3, wherein the knob body (NB) and the operating button (140) are restricted to each other in a rotational direction on the driving shaft (71), so that the knob body (NB) and the operating button (140) are rotated with each other.

5. The knob assembly of any one of claims 1 to 4, wherein a operating hole (125) is formed by penetrating the knob body (NB) in a direction perpendicular to the axial direction, and
the operating portion (143) is exposed outwards through the operating hole (125), and the operating portion (143) forms a portion of an exterior part of the knob body (NB).

6. The knob assembly of any one of claims 1 to 5, wherein a safety pin (150) interfering with the base portion (110) or released from interference is connected to the operating button (140), and
the safety pin (150) is operated in conjunction with the operating button (140) and is moved between the first position and the second position.

7. The knob assembly of any one of claims 1 to 6, wherein the knob body (NB) is linearly moved in a first direction that is the axial direction, and the operating button (140) is linearly moved between the first position and the second position in a second direction different from the first direction, and
a safety pin (150) protrudes in the first direction.

8. The knob assembly of any one of claims 1 to 7, wherein the knob body (NB) comprises:
a first knob body (120) having an inner space (121a) that is open toward the base portion (110); and
a second knob body (130) disposed in the inner space (121a), and rotated and linearly moved with the first knob body (120),
wherein a operating hole (125) is formed through the first knob body (120) to expose the operating portion (143) of the operating button (140).

9. The knob assembly of claim 8, wherein the operating button (140) interferes with an edge of the operating hole (125) when the operating button (140) is moved from the second position to the first position, thereby restricting movement, and/or
wherein the second knob body (130) comprises a shaft coupling part (131) to which an end portion of the driving shaft (71) is coupled, and a remaining portion of the second knob body (130) excluding the shaft coupling part (131), and the operating button (140) are disposed at opposite sides to each other with the shaft coupling part (131) as center, and/or
wherein a pair of elastic members (S) is provided in the knob body (NB) to provide an elastic force to the operating button (140), the second knob body (130) comprises a support plate (136) protruding in the axial direction toward the opposite side of the base portion (110), and the support plate (136) is disposed between the pair of elastic members (S).

10. The knob assembly of any one of claims 1 to 9, wherein a safety pin (150) is provided in the knob body (NB) and is operated in conjunction with the operating button (140),
a weight plate (160) is coupled to the knob body (NB) to be rotated and moved with the knob body (NB),
the weight plate (160) includes a pin passing hole (165) into which the safety pin (150) penetrates,
the safety pin (150) is moved between the first position and the second position with passing through the pin passing hole (165), and
the safety pin (150) at the first position interferes with the base portion (110).

11. The knob assembly of any one of claims 1 to 10, wherein the knob body (NB) includes a safety pin (150) that protrudes in a first direction that is the axial direction and is operated in conjunction with the operating button (140),
the base portion (110) comprises a locking groove (115) recessed from a central portion of a rotation path of the safety pin (150) in a radial direction of the rotation path, and
when the operating button (140) is disposed at the first position, the safety pin (150) is inserted into the locking groove (115) and restricts rotation of the knob body (NB).

12. The knob assembly of claim 13, wherein the locking groove (115) is open in a direction toward the central portion of the rotation path of the safety pin (150), and when the operating button (140) is moved from the first position to the second position, the safety pin (150) is moved toward the central portion of the rotation path and separated from the locking groove (115), and/or
wherein the depth in the axial direction of the locking groove (115) is longer than a distance in the axial direction of the operating button (140).

13. The knob assembly of claim 11, or 12, wherein a stepped part (117) is provided by protruding toward the safety pin (150) in the axial direction, on a bottom surface of the locking groove (115), and when the operating button (140) is located at the first position, the stepped part (117) interferes with the safety pin (150) in the axial direction and restricts the shaft-directional movement of the safety pin (150), and/or
wherein the locking groove (115) is open in a direction toward the central portion of the rotation path of the safety pin (150), and a guide part (116a,116b) is provided on an edge of the locking groove (115) by protruding toward the central portion of the rotation path.

14. The knob assembly of any one of claims 1 to 13, wherein a portion of the operating button (140) protrudes in the first direction that is the axial direction to form a protrusion,
the base portion (110) comprises a locking groove (115) recessed from a central portion of a rotation path of a safety pin (150) in a radial direction of the rotation path, and
when the operating button (140) is disposed at the first position, the protrusion is inserted into the locking groove (115) and restricts rotation of the knob body (NB).

15. The knob assembly of any one of claims 1 to 14, wherein a safety pin (150) is provided in the knob body (NB) and is operated in conjunction with the operating button (140),
the base portion (110) comprises multiple locking grooves (115), which are formed by being recessed from a central portion of a rotation path of the safety pin (150) in a radial direction of the rotation path and into which the safety pin (150) is inserted, and
the multiple locking grooves (115) are disposed to be spaced from each other along the rotation path.
